# EUROPEAN PATENT APPLICATION

(11) **EP 4 462 336 A1**
(43) Date of publication of application: **13.11.2024**
(21) Application number: 23020212.9
(22) Date of filing: 08.05.2023
(51) Int. Cl.: G06Q 20/36

(54) **LOW SECURITY LEVEL TRANSACTION UNIT, HIGH SECURITY LEVEL TRANSACTION UNIT, ELECTRONIC TRANSACTION SYSTEM AND METHOD FOR EXCHANGING TOKEN**

(71) Applicant: Giesecke+Devrient advance52 GmbH, 81677 München (DE)
(72) Inventor: Hupel, Lars, 81677 München (DE)
(74) Representative: Giesecke+Devrient IP

(57) **Abstract**

The invention relates to a low security level secure transaction unit. The invention relates to a high security level transaction unit. The invention also relates to an electronic transaction system in particular an electronic transaction system. The invention also relates to a method for exchanging tokens. A low security level transaction unit (TU_{low}) for managing transactions in an electronic transaction system (TS), transactions comprising a token exchange, the transaction unit (TU) comprising:
- means for receiving one or more tokens (T) from another transaction unit (TU_{high}, TU_{low}) in a transaction within the electronic transaction system (TS); and
- means for permanently storing a security level indicator (SLI), the security level indicator (SLI) being configured to indicate the low security level of the low security level transaction unit (TU_{low}),
wherein the security level indicator (SLI) being transmitted prior to a token exchange with the other transaction unit (TU_{high}, TU_{low}) in an offline transaction scenario.

## Description

The invention relates to a low security level secure transaction unit. The invention relates to a high security level transaction unit. The invention also relates to an electronic transaction system in particular an electronic payment transaction system. The invention also relates to a method for exchanging tokens.

Tokens - also referred to as digital assets, electronic coins, coin data sets - may represent any digital asset, in particular a digital currency, preferably a central bank digital currency, short CBDC. These tokens are issued and deleted by an issuing unit of the payment transaction system, such as an issuing authority, or a central bank unit or a commercial bank unit, hereinafter also referred to as secure token issuing unit.

Electronic token transactions and/or storage of tokens and any associated transaction data and/or storage data in an electronic payment transaction system must be safe and secure and so, means for protecting confidentiality, integrity, and availability of exchanged and/or stored token data must be implemented. This is especially true for electronic payment transactions and associated payment transactions and payment storages in which a monetary value is linked with each token.

There are different technical approaches for a digital asset such as CBDC, issued by a central bank.

According to a first approach, tokens are merely cryptographically secured by the central bank unit and the cryptographically secured tokens are exchanged directly between token transaction units - also referred to as secure wallets - of the participants in the electronic payment system in an encrypted manner. The exchanged token may also be stored in an encrypted manner. The token transaction units can verify the authenticity of the tokens based on the cryptographic security, such as keys and signatures, and for example checks a certificate from the central bank and/or the other token transaction units for validity within the certificate hierarchy in advance via online access or following the offline protocol of the system.

According to a second approach, tokens are stored in a centralized or decentralized blockchain/distributed ledger of the payment transaction system, e.g., organized by a central bank unit. For a payment transaction, an ownership of a token record changes in the blockchain for which a lot of information (sender/recipient/amount) is required and/or even published. Sender and recipient of the token need an online access to the blockchain at the time of the transaction.

According to a favorable third approach as for instance described in WO 2020 / 212 331 A1 tokens are stored in a local token management unit (also called wallet or payment application unit) to be exchanged between participants of an electronic payment transaction system. The transferred token can validly be used after receipt from another participant without a need of approval or verification via an online connection. So, if an online connection is not available or inconvenient or should not be used for a specific token transaction, it remains possible to validly transfer tokens directly between participants in the electronic payment transaction system. For security-, verification- and registration-purposes, a token reference register stores token references of all valid tokens without knowing the tokens itself. So, the user can check validity of a received token. The token reference register only stores token references of the corresponding token. Tokens can be further modified by each participant of the payment transaction system. Participants may request to replace registered token references by new token references. The overall monetary value in the token reference register will not change upon replacement. Accordingly, a registered token may be switched to a new token (SWITCH request), a token may be split into new tokens (SPLIT request) or multiple tokens may be merged into a new token (MERGE request).

Each participant in the electronic payment transaction system according to the third approach comprises a transaction unit that is assigned to him. Each of these transaction units enable a high standard for security, confidentiality and safety regarding payment transactions and are therefore referred to as secure transaction units.

However, the technical requirements for these secure transaction units in terms of process isolation, tamper proof, secure boot, fraud resistance are comparably high and so, these secure transaction units are technically complex.

There is a need to enable transaction using much simpler transaction units. These transaction units may not have these technical requirements compared to the above-mentioned secure transaction units. However, the safety, security, data integrity and confidentiality within the electronic payment transaction system must be assured at any times to avoid attacks, such as double-spending of tokens and/or spending tokens with fraud-generated (not in real existing) monetary values.

The above-identified problems are solved with the features of the independent patent claims. Further advantageous embodiments are described in the dependent patent claims.

In an aspect of the present invention there is provided a low security level transaction unit for managing transactions, e.g. payment transaction, in an electronic transaction system, e.g. an electronic payment transaction system. The low security level transaction unit may also referred to as simple-wallet.

The low security level transaction unit comprises means for receiving one or more tokens from another secure transaction unit for exchanging tokens as a (payment) transaction within the electronic (payment) transaction system.

The exchange may be a direct exchange of the token between two (or more) transaction units, e.g. including a physical receiving data sets representing the tokens from another transaction unit via a direct communication link.

The transaction unit further comprises means for permanently storing a security level indicator. The security level indicator being configured to indicate the security level of the transaction unit, e.g. the low security level of the low security level transaction unit. The security level indicator is transmitted prior an exchange of tokens with the other transaction unit.

Permanently storing the security level indicator may mean that this indicator is stored in a non-volatile memory area within the low security level transaction unit.

Permanently storing the security level indicator may mean that this indicator is stored in a (programmable) read-only-memory, or a write-once-memory, also called persistent memory.

The permanently storing may occur upon production of the low security level transaction unit, e.g. in a personalization phase or firmware insertion phase of the production.

Permanently storing the security level indicator may mean that this indicator is written in a semi-permanent memory, e.g., a flash memory, wherein access rights to this semi-permanent memory are only given to high level security instances, such as token issuer or central instances, such as a token reference register.

The security level indicator is used to indicate the security level of this particular transaction unit. This security level indicator may indicate the presence or absence of a specific secure component, such as a hardware- or software component in the low security level transaction unit.

The security level indicator may be an indicator that is based on technical standards for information security, cybersecurity and privacy protection and evaluation criteria for IT security as for instances defined under "common criteria" in ISO/IEC 15408:2022 and/or in ISO/IEC 18045:2022 and/or based on a certificate issued by the European "Information Technology Security Evaluation Criteria", short ITSEC.

The low security level of the low security level transaction unit is a security level that is lower than a high security level of a high security level transaction unit (as defined below).

For instance, the low security level transaction unit is a transaction application available in a public application store. This transaction application does not need to fulfil complex certifications or security-requirements and is available for a plurality of terminal device having very different hardware components installed.

Prior the token exchange, the security level indicator is shared between the participating transaction units. This means that the security level is exchanged first and once this exchange is finished, the token exchange may be initiated (or not).

However, once this security level indicator is shared and a token exchange successfully occurred between these two participants, the electronic transaction system may not require to exchange the security level indicator again - since both participants successfully exchanged tokens already and know the permanently stored security level indicator.

So it may be a system requirement to at least once exchange the security level indicator between unknown transaction units.

However, it may be another (alternative) system requirement to exchange the security level indicator between transaction units, if these transaction units have not exchanged token for a predefined time duration, e.g. one week or one month or one year.

However, it may be another (alternative) system requirement to exchange the security level indicator between transaction units always and independent from any successful token exchange.

With such a low security level transaction unit it is assured that all participants in the electronic payment system are informed about the security level of the respective transaction unit with whom a token exchange is initiated.

The token may also be referred to as value note within this disclosure. The token may represent central bank digital currency, CBDC.

The token can be exchanged in online and offline (payment) transaction scenarios.

So, it is per se possible to exchange tokens in offline electronic (payment) transactions scenario between two directly communicating secure token managing units (e.g., secure elements) within the electronic transaction system.

An offline electronic payment transaction scenario is defined herein as a direct transaction between two transaction units that participate in the transaction, e.g. the transaction unit that transmits a token (sender, payer) and/or the transaction unit that receives a token (receiver, payee). The transmitting transaction unit may have no access and cannot communicate with remote instances of the electronic payment transaction system, such as a token register, a transaction register, a token issuing unit and/or a service provider unit, such as financial service provider (FSP) via classical internet or mobile communication means. The offline electronic payment transaction includes a local, direct token transfer. A connection to the remote instance(s) of the electronic payment transaction system is not available and/or used in the offline electronic payment transaction scenario. So, the offline transaction in particular does not include a remote communication step. In particular, both transaction units do not have and/or use a remote connection during the offline electronic payment transaction. The transfer will take place only by local communication (only), preferably by local wireless communication means, such as Bluetooth, NFC, or any other suitable wireless communication protocol. The token transfer may also take place by contact-based communication means, such as USB, ISO 7816, or any other suitable contact-based communication protocol. A local terminal, such as a wireless and/or contact-based terminal, may be used for enabling the local communication between both transaction units.

In an implementation, the low security level transaction unit further comprises means for transmitting one or more tokens to another transaction unit for exchanging tokens as a payment transaction within the electronic transaction system, wherein these means for transmitting is either in a released state or in a blocked state, wherein these means for transmitting is in a blocked state in an offline payment transaction scenario.

In the blocked state, the transmitting means is deactivated for transmitting tokens. It is thus not possible to transmit (send) tokens in the blocked stated of this transmitting means to another transaction unit.

In the released state, the transmitting means is activated for transmitting tokens. It is thus possible to transmit (send) tokens in the released stated of this transmitting means to another transaction unit.

Since the transaction unit has a low level of security, it is more likely that it is attacked or manipulated, because secure components, such as tamperproof or secure-boot or isolated units, may not be present in this low security level transaction unit. Since the transmitting means or transmitting the tokens is in a blocked state, it is now assured that a low security level transaction unit cannot transmit tokens to other transaction units in such an offline payment transaction scenario in order to increase confidentiality and safety in the system.

However, for these low security level transaction units it is still possible to receive tokens from other (high security level) transaction units within an offline transaction scenario, so participation in transactions is not entirely impossible for this kind of transaction unit in an offline transaction scenario.

Further, it is per se also possible for the low security level transaction unit to exchange (transmit or receive) tokens in online electronic transactions (online transaction scenario) within the electronic transaction system. Preferably, the means for transmitting of the low security level transaction unit is in a released state in an online transaction scenario.

Moreover it could be noted that, the means for receiving of the low security level transaction unit are usable in an online transaction scenario as well as in an offline transaction scenario. Hence, the low security level transaction unit may receive tokens regardless of the transaction scenario being an online or offline transaction scenario. Although the means for receiving may or may not comprise a blocked state, it could accordingly be considered to be in a released state for online and offline transaction scenarios.

An online electronic transaction scenario is defined herein as a transaction in which a transaction unit that participates in the transaction, e.g. the transaction unit that transmits a token (sender, payer) and/or the transaction unit that receives a token, communicates with one or more remote instances of the electronic payment system. Remote instances such as a token register, a transaction register, a token issuing unit, a service provider unit such as financial service provider (FSP) can be reached via remote communication, e.g. via classical internet or mobile communication means or any other suitable online communication protocol. So, the online transaction includes a remote communication step/ a use of remote communication means. For example, in a system including a remote token reference register a request is sent to the remote token reference register by one of the transaction units involved in the transaction. The request may be a registration request for a token reference of the token transmitted, e.g. for amending or storing the respective token reference in the remote token reference register, or a validity request for token reference of the token transmitted, e.g. for confirming validity of the token. The token transfer may take place using local communication (means), but additionally uses a remote communication means, e.g. remote communication means of one of the transaction units or remote communication means of a local terminal. Accordingly, even if a (receiving or transmitting) transaction unit has no remote connection, it may use the existing remote connection of the terminal or the other transaction unit in the online electronic transaction scenario.

In an implementation, the low security level transaction unit further comprises means for transmitting one or more registration requests to a token reference register of the electronic transaction system. Each registration request comprises one or more token references to be stored in the token reference register. The registration requests are also referred to as replacement requests and are used to register modifications of the token in the token reference register.

The registration request may have input token references and may have output token references for protocolling the payment transaction in the event of a destroyed or malfunctioned or a stolen transaction unit.

The token may be an asset token. The token may be a currency token. The token may be a central bank issued token, such as a CBDC. The token may be a digital currency token from other commercial issuers.

Each token reference is uniquely assigned to a token in the electronic payment transaction system. And, the token reference is (uniquely) associated with a token in the transaction system. Knowledge of a token reference does not authorize issuing of the digital money represented by the token. This represents a key difference between token references and tokens. A token reference is unique and also uniquely associated with one token, so there is a 1-to-1 relationship between the token and the token reference. The token reference can be computed by each transaction unit of a participant in the electronic transaction system. The computing is preferably performed by control means of the transaction unit.

The means for transmitting is in the released state in an online payment transaction scenario. In the released state, the transmitting means is activated for transmitting tokens to other transaction units. It is thus possible to transmit (send) tokens in the released stated of this transmitting means to another transaction unit.

A payment transaction with transmitting of tokens from this low security level transaction unit requires an assigned token reference to be registered in the token reference register within the transaction. For registration of the token in the token reference register, the token reference of the token must be generated (in the transaction unit).

Each token may comprise a monetary value as a first token element. The monetary value may be a data that represents money usable in one or more electronic payment transaction.

A token that is managed by a transaction unit is a token that resides in a memory (storage) space. The memory space can be an internal memory space of the transaction unit, or it can be an external memory space to which the transaction unit has exclusive access rights. This memory space can include a remote memory space, such as a cloud memory (storage) space.

The token reference is a set of data to be stored in the token reference register to register the tokens and further to resolve transaction errors or detect a fraud.

One or more token references of a registration request comprise the monetary value of the assigned token, a reference, which is preferably a public key corresponding to the private key of the token-individual key pair as token reference elements. The reference is used as the data element in the token reference to register the token in the electronic transaction system.

The means for transmitting one or more registration requests may insert the security level indicator into one or more of the token references. So, the security level indicator is also registered with this token and it can be verified whether this token was transmitted with a low security level transaction unit or not.

In another aspect of the disclosure there is provided a high security level transaction unit for managing payment transactions in an electronic (payment) transaction system. The high security level transaction unit may also referred to as secure-wallet.

The transaction unit comprises means for receiving one or more tokens from another transaction unit for exchanging tokens as a payment transaction within the electronic transaction system and means for permanently storing a security level indicator. The security level indicator is configured to indicate a high security level of the transaction unit. The security level indicator is transmitted prior the exchange of tokens with the other transaction unit.

The high security level of the high security level transaction unit is a security level that is higher than a low security level of a low security level transaction unit (as defined above).

In the high security level transaction unit the means for receiving may either be in a released state or in a blocked state, wherein these means for receiving is in a blocked state in an offline transaction scenario with a low security level transaction unit. Preferably, these means for receiving is in a released state in an offline transaction scenario with another high level transaction unit. The high security level transaction unit in particular further comprises means for transmitting one or more tokens to another (high or low security level) transaction unit for exchanging tokens as a transaction within the electronic transaction system. The means for transmitting of the high security level transaction unit are preferably usable in online and offline transaction scenarios and with high and low security level transaction units. Accordingly, regardless of the transaction scenario being an offline or online transaction scenario, the high security level transaction unit may transmit one or more tokens to another transaction unit, wherein the transaction unit could another high security level transaction unit or a low security level transaction unit.

As stated above, the security level indicator may be an indicator that is based on technical standards for information security, cybersecurity and privacy protection and evaluation criteria for IT security as for instances defined under "common criteria" in ISO/IEC 15408:2022 and/or in ISO/IEC 18045:2022 and/or based on a certificate issued by the European "Information Technology Security Evaluation Criteria", short ITSEC.

The high security level transaction unit may further comprise means for transmitting one or more tokens to another transaction unit for exchanging tokens as a (payment) transaction within the electronic transaction system.

In an implementation, the high security level transaction unit comprises a secure component. This secure component assures that the security level of the transaction unit is high. It may be worth to mention that a low security level transaction unit as defined above lacks such a secure component and thus has a low security level.

The secure component may be a trusted execution environment, TEE. Such a trusted execution environment may be a secure area of a main processor. It may guarantee code and data loaded inside to be protected with respect to confidentiality and integrity. Such data integrity prevents unauthorized entities from outside the TEE from altering data, while code integrity prevents code in the TEE from being replaced or modified by unauthorized entities. The TEE may have a process isolated area. It may have a secure boot implementation. The TEE may be tamper proof.

The secure component may be a hardware security module, HSM. The HSM is a physical computing device that safeguards and manages secrets, e.g. the tokens, performs encryption and decryption functions, e.g. for digital signatures, strong authentication and other cryptographic functions. HSM may come in the form of a plug-in card or an external device that attaches directly to a computer or network server or may contain one or more secure crypto-processor chips.

The secure component may be a secure storage unit. The storage may be an internal storage of the high security level transaction unit and it may be an isolated storage. This storage unit cannot be read-out and it may be tamper-proof.

The secure component may be a secure program code. This secure program code may assure a secure and tamper proof booting of the high security level transaction unit. This secure program code may assure a resistance against error attacks or time-out attacks that are used to try to manipulate the high security level transaction unit. This secure program code may assure an analysis proof of the high security level transaction unit, such as data, timing and error attacks may be revealed with such a secure program code.

The security level indicator as stored with the transaction unit may be a data element within a transaction unit identifier of the transaction unit. The transaction unit, also referred to as wallet-ID, may be a unique identifier within the electronic transaction system that is assigned to the transaction unit.

The security level indicator as stored with the transaction unit may be a data element within a certificate, preferably an authentication certificate of the transaction unit.

The security level indicator as stored with the transaction unit may be a data element within a security certificate. Especially if the security level is specified according to "Common Criteria" of ISO/IEC 15408:2022 or ESO/IEC 18045:2022, for example as "Protection Profile" and/or with an Evaluation Level, short EAL, the issuer of the certificate may have different roles, such as transaction unit issuer; or an external evaluator; or a transaction unit manager/provider that merely loads the transaction unit as a software element into an entity; or producer/manufacture of the transaction unit; or a transaction system operator; or a token issuer, such as a central bank. The transaction unit may contain a (root) certificate for a certifier key. This certifier key may be an issuer public key signed from a root certificate authority of the transaction system.

The security level indicator may be exchanged during an authorization procedure of the transaction unit for a future payment transaction with the other transaction unit. So, the security level indicator may be exchanged as a part of authentication procedure in order to verify that both transaction units are able to exchange tokens at all and for instance to establish a secure channel for the exchange of tokens (and the secure level indicator).

During the authorization procedure, an authorization certificate may be transmitted to the other transaction unit. The authorization certificate may be used to certify the public key of the token reference or another public key used for authentication. The authorization certificate preferably comprises the security level indicator and/or a transaction unit identifier.

Thus, as part of the authentication procedure, the transaction units may exchange authentication certificates which certify a public key for the authentication and that may optionally include a transaction unit identifier (unique in the electronic transaction system) and/or the security level indicator.

The transaction unit may preferably comprise an identification-certificate that preferably comprises the security level indicator and/or a transaction unit identifier and/or a security level indicator certificate. So, if required, the transaction unit can have a separate identification certificate, e.g. for the transaction unit identifier (wallet-ID) and optionally for the security level indicator and/or it may comprise a separate security level indicator certificate. These certificates may be linked to each other via a public key or via an identifier of the transaction unit.

The certificate(s) may include both the data elements in plain text and digital signature(s) over one or more or preferably all of these data elements.

In variants of the system the low security level transaction unit may receive one or more tokens in a third party encrypted form, preferably the low security level transaction unit then would be adapted to receive tokens only in the third party encrypted form. The third party encrypted token can only be decrypted by the third party. Accordingly, the low security level transaction unit and/or the other transaction unit participating in the transaction may provide a third party encryption key. The token is encrypted by the other transaction unit participating in the transaction using a third party encryption key. The low security level transaction unit may store the one or more received token in the third party encrypted form and/or may in a separate transaction transmit the one or more third party encrypted token to the third party. The third party may store a third party decryption key and/or decrypt the third party encrypted token received from the low security level transaction unit. A high security level transaction unit associated with the low security level transaction unit may be the third party. Alternatively, the third party maybe the token register or the transaction unit issuing unit.

In an aspect, an electronic (payment) transaction system comprises a plurality of transaction units (TU) as described above, being low security level transaction units and/or high security level transaction units. Each of these transaction units are enabled for receiving one or more tokens during a transaction. The system further comprises one or more remote entities, such as a token register for registering the tokens of the electronic (payment) transaction system or a service provider unit or a transaction unit issuer unit. The token register maybe a token reference register.

One or multiple low security level transaction unit of the plurality of transaction units comprise means for transmitting and/or means for receiving. In the offline transaction scenario the means for transmitting one or more tokens of the low security level transaction unit, preferably based on the stored security level indicator, is in a blocked state. In addition or alternatively in the online transaction scenario the means for transmitting, preferably based on a received security level indicator, is in a released state with only high level security transaction units or with high and low level security transaction units. In addition or alternatively the means for receiving, preferably based on a received security level indicator, is in a released state with high and low level security transaction units or only with high level security transaction units.

One or more high security level transaction unit of the plurality of transaction units comprise means for transmitting and/or means for receiving (tokens). In the offline transaction scenario the means for receiving tokens is blocked to receive one or more tokens from a low level security transaction unit, preferably based on a received security level indicator indicating the low security level of the low security level transaction unit. In addition or alternatively in the online transaction scenario the means for receiving tokens is released (or is blocked) to receive one or more tokens from a low level security transaction unit, preferably based on a received security level indicator indicating the low security level of the low security level transaction unit. In addition or alternatively in the online transaction scenario the means for receiving is in a released state with high and low level security transaction units or only with high level security transaction units. In addition or alternatively in both scenarios the means for transmitting is in a released state with high and low level security transaction units.

In variants of the system low security level transaction units may have at least one dedicated/ associated high level security transaction unit of the plurality of transaction units associated. Optionally, at least one dedicated/ associated high level security transaction unit of the plurality of transaction units may be associated with the low security level transaction unit. In the online transaction scenario the means for transmitting of the of the low security level transaction unit, preferably based on a received security level indicator, is in a released state with only the at least one dedicated high level security transaction unit. Accordingly, the means the means for transmitting of the of the low security level transaction unit, preferably based on a received security level indicator, is in a blocked state for other high level (or low level) security transaction units of the plurality of transaction units. A dedicated/associated high security level transaction unit of the plurality of transaction units being associated with one or more associated low security level transaction units may be part of the transaction system. The associated high security level transaction unit may be a (remote and/or) online high security level transaction unit. In the online transaction scenario, which preferably is the only scenario for this transaction unit, its means for receiving one or more tokens is in a released state with the one or more associated low security level transaction units. Preferably, the means for receiving is in a blocked state with other low security level transaction units. In advantageous embodiments the associated high security level transaction unit comprises a decryption key for decrypting the one or more token received in encrypted form in the (one or more) associated low security level transaction unit.

In an aspect there is provided a method for exchanging a token in a transaction with a transaction unit of a payment system, preferably in a transaction unit as described above and/or within a transaction system describe above, wherein the token exchange is performed in either an online transaction scenario or in an offline transaction scenario. The method comprising in the transaction unit:
- determining a security level indicator indicating a low security level of a low security level transaction unit, by reading a security level indicator stored in the transaction unit and/or by receiving a security level indicator of another transaction unit; and
- in the offline transaction scenario, blocking a transmission of one or more tokens from the low security level transaction unit; and
- in the online transaction scenario, preferably transmitting one or more tokens from the low security level transaction unit.

The method may further comprise one or more of the following steps:
- transaction determination, particularly including determination of transaction details, such as transaction value and direction, and/or determination of the transaction scenario, online or offline; and/or
- exchange of the security level indicator, preferably as a data element of a certificate, such as an authentication certificate or a security level certificate, particularly as described above;
- authentication of the transaction unit, preferably mutual authentication of both transaction units participating in the token exchange; and/or
- in the online scenario transmission of one or more tokens from the low security level transaction unit, preferably at least to an associated high security level transaction unit; and/ or
- confirming transaction completion to the other transaction unit participating in the token exchange.

The method thus may comprise the steps of: authenticating the transaction unit, wherein during the authentication procedure, a security level indicator of each participating transaction unit is exchanged within the other and/or all transaction units participating in the token exchange.

Based on the payment transaction scenario and/or the security level indicator (received or stored), the transaction unit may deny or accept one or more token from the transaction unit.

Alternatively, in an offline payment transaction scenario, means for transmitting one or more token of a low level security transaction unit is in a blocked state and/or in an online payment transaction scenario, means for transmitting one or more token of a low level security transaction unit is in a released state.

With a transaction unit, the registering of token references remains an anonymous process, because the token reference register does not obtain information about the owner of the token, e.g., the sender or receiver of the individual token.

A control means within the transaction unit may be configured to generate one or more of the token references of a registration request to be transmitted to the token reference register.

During this generation, the control means may be further configured to insert the security level indicator into one or more of the token references generated by the transaction unit. So, the security level indicator as an additional token reference element is inserted by the transaction unit itself.

A registration request may contain token references with secure level indicator and without security level indicator, e.g. to reduce the number of data to be transferred to the token reference register.

The control means of the transaction unit is configured to obtain the security level indicator from a local storage unit of the transaction unit.

Alternatively or additionally, the control means of the transaction unit is configured to request the security level indicator from a central instance (e.g. the token reference register) or a (financial) service provider unit in case this security level indicator is not permanently stored in a storage unit of the transaction unit.

A service provider unit to which the token reference(s) may be transmitted or forwarded from individual transaction units may be configured to issue transaction units, e.g. low security level transaction units as described above and/or high security level transaction units.

A service provider unit to which the token reference(s) may be transmitted or forwarded from individual transaction units may be configured to issue one or more token that is assigned to the token reference.

A service provider unit to which the token reference(s) may be transmitted or forwarded from individual transaction units may be configured to manage the transaction unit.

In an embodiment, the means for transmitting the one or more registration requests is configured to forward the registration request with one or more token references to the token reference register, wherein the token reference register may additionally be configured to request an authentication from the transaction unit. Alternatively, the transaction unit may not be required to be authenticated at the token reference register.

The control means of the transaction unit is further configured to generate one or more token references of a registration request based on modification commands (replacement requests) being processed by the secure transaction unit, the modification commands being preferably one or more of a switch-command, a merge-command and a split-command, wherein the modification commands are only performed for tokens having the same token-type information. For further details related to these modification commands it is referred to WO 2020 / 212 331 A1 and WO 2020 / 212 331 A1.

In an embodiment, the transaction unit is an element that is operatively connected to an electronic terminal device of a participant in the electronic transaction system.

In an embodiment, the transaction unit is a wallet, such as a wallet software or a wallet application residing in a terminal device of the participant.

The control means of the transaction unit may be configured to access a token storage, preferably a token storage of the transaction unit.

The transaction unit may comprise a token storage as a physical entity. The transaction unit may be configured to access the token storage. The token storage may be a token vault of this transaction unit. Each transaction unit in the electronic (payment) transaction system may comprise its own token storage.

From such token storage accessible by the transaction unit, each token can be transferred to any other secure transaction unit, e.g., owned by a customer of the transaction unit.

The transaction unit, especially the high security level transaction unit as described above, may be a (secure) wallet that may be a hardware security module built in hardware or software to enable tamperproof and secure access to the tokens.

The control means of the transaction unit may be configured to generate a registration request for a switch-command, in which a registered token reference is replaced by a new token reference, wherein the registration request comprises a signature based on the private key of the token-individual key pair of the token reference. This switch-modification command may be executed only if the old token reference (input token reference) is valid.

In another aspect of the invention, a token reference register for registering of token of an electronic payment transaction system is provided.

The token reference register comprises one or more storage units for storing token references for registering tokens in the electronic payment transaction system. Each stored token reference in the token reference register may comprise the monetary value of the token and a public key corresponding to the private key of the token-individual key pair as a reference.

The token reference register further comprises one or more verification units for verifying whether the token reference of a receive registration request is stored in the token reference register. Each verification unit may be configured to reject a registration request in case a verification of this request fails.

At least a subgroup of token references in the token reference register further comprises a security level indicator as a further token reference element.

The storage unit of the token reference register is further configured to store token references of modified tokens based on a modification command (as part of a registration request), preferably a switch-command, a merge-command, and/or a split-command, wherein a token reference of the modification command is stored only in a case all tokens involved in the modification command comprise the same token-type information.

The token reference register is a central unit within the electronic transaction system. This token reference register can be a central database or storage unit of the electronic transaction system.

This token reference register may be a decentralized ledger, for example in a blockchain topology.

The basic principle of registering a token is that a received registration request is verified by the token reference register to see whether the token reference assigned to the token is already known in the token reference register. If the token reference is already known, it is not stored again. If the token reference is not known, it is entered (stored) in the token reference register to be available for future verification and check steps in the secure payment transaction system.

A token reference is stored only once in the token reference register. Since a token reference of a token exists only once in the transaction system, the verifying unit can determine whether an attempt was made to spend a token more than once.

The token reference may comprise the monetary value of the uniquely assigned token. This monetary value may be used to further validate the registration request at the token reference register.

In preferred embodiments the registration request could be an addition request from a secure token issuing unit of a token issuer of the transaction system, requesting the addition of the token reference of a new token to the token reference register. In the system only the token issuer may add and/or delete token references to/from the token reference register. The registration request could be a replacement registration request from a transaction unit of the transaction system, requesting at least one input token reference stored in the token reference register to be replaced in the token reference register by the at least one (output) token reference to be stored. The replacement registration request may comprise m input token references and n output token references (m, n = 1, 2, ...).

In addition to the token reference(s), which comprise the (respective) hash value but do not comprise the (respective) public key of the token-individual key pair of the token, the received registration request may comprise one or more further token reference(s), preferably input token references, assigned to further token(s). The further token reference(s) comprise a public key of an token-individual key pair of the further token(s). The public key of the token-individual key pair allows the token reference register, in particular the verifier unit, to verify a signature created by the secret key of the token-individual key pair. Preferably, the public key is included only in (input) token reference(s) of the registration request for token reference(s) to be deleted. Again, in contrast thereto, output token reference(s) to be stored in the token reference register do not include the public key.

Preferably, in the verification unit it is verified whether the at least one token reference of the received registration request is not stored in the storage unit of the token reference register and/or if an input token reference of the received registration request is stored in the storage unit of the token reference register. Furthermore or alternatively the verification unit is further configured to verify whether the registration request is not already stored in an archive of previous registration requests of the token reference register. Preferably, each registration request processed in the token reference register, in particular registration requests for which the storing step in the storage unit(s) was performed, will be stored in the archive of previous registration requests.

One aspect of registering a token is that a received registration request is verified by the verification unit(s) to see whether the token reference assigned to the token and/or the registration request is already known in the token reference register. If the token reference and/or the registration request are already known, the token reference is not stored. If the token reference (and the registration request) is not known, it is entered (stored) in the token reference register to be available for future use (verification and check steps) in the secure payment transaction system.

It may additionally or alternatively be determined by the verifying unit of the token reference register whether the received registration request as such is (syntactically) correct. The step of verifying the correctness of the received registration request is preferably performed prior to verifying the criteria in the token register.

Verifying the correctness of the received registration request, preferably comprises one or more of the following substeps:
for each input/further token reference in the received replacement registration request, the input/further token reference being assigned to an input/further token, verifying whether a signature in the registration request was created by the private key of the respective input/ further token; and/or
for each input/further token reference in the received replacement registration request verifying whether the hash value of the input/further token reference can be rederived from the public key included in the received replacement registration request; and/or
Verifying whether the received replacement registration request is value-neutral, by comparing the monetary value of (all) input token reference(s) and the monetary value of (all) output token reference(s) of the replacement registration request; and/or verifying whether the addition registration request is signed by a secure token issuing unit.

In the verifying step, a public key (of input token reference(s)) of the received registration request may be used to calculate the corresponding hash value for verifying whether the public key in the request corresponds to the hash value in the request and/or for verifying whether a token reference comprising the hash value is (still) stored in the token reference register (and thus can be deleted).

In one embodiment, the verifying unit is configured to determine whether a signature of the registration request is correct.

The electronic transaction system may further comprise a secure token issuing unit that comprises a minting unit configured to generate a new token to be issued in the electronic transaction system; and a melting unit configured to delete tokens to be deleted from the electronic transaction system.

An archive of previous registration requests could be used to verify, whether the (current) registration requests has been successfully processed (token references stored) already. In such cases where a processed registration requests is received a second or third time, it will not be processed anymore.

The use of a token reference is not comparable to the use of addresses of subscriber entities in a blockchain-based transaction system, as no addresses of subscriber entities are used in the token reference register according to the invention to prevent traceability of the tokens.

In embodiments, the received registration request is signed with the private key of the token-individual key pair to be able to check or verify a unique assignment of the token reference to the token. If the verification in the verifying unit is successful, i.e., the signature can be verified, then the transaction unit (sender) transmitting the registration request must be in possession of or must be aware of the token. This makes it possible to detect a fraud attempt with non-existent tokens or unauthorized generated tokens.

The use of multiple verification units enables parallel processing of registration requests and speeds up registration in the transaction system. The verification unit(s) compares, for example, a command type of the received registration request with the token values of the received registration request. If a command type is expected not to add token values to or subtract token values from the transaction system, it verifies that this is met with the token values of the received token references. If verification fails, fraud is detected, and a (wrong) registration is prevented.

Each combination and also the insertion as named herein may be referred to as a concatenation, which is a logical combination used in information technology.

Each token may comprise a private key as a second token element. The private key may be referred to as a blinding value (e.g. obfuscation amount) or may be a random number or may be a secret that is not known to participants not involved in a transaction. The private key may be a private key of a token-individual key pair.

In addition, each token may have further token elements as outlined below and may also have further token elements such as further metadata, e.g., currency data that indicates the currency which the monetary amount represents and/or validity data and/or timestamp data. Token of different token-type may have the same currency data, thus they may belong to the same currency.

Implementation of modifications to tokens can be performed with the known payment transactions of WO 2020/212 337 A1; WO 2020/212 331 A1; WO 2021 /170 646 A1 and WO 2021 / 170 645 A1 protocols.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows an exemplary embodiment of an electronic transaction system for token transactions according to the invention.
Fig. 2 shows a method for exchanging token within an electronic transaction system as shown in Fig. 1.

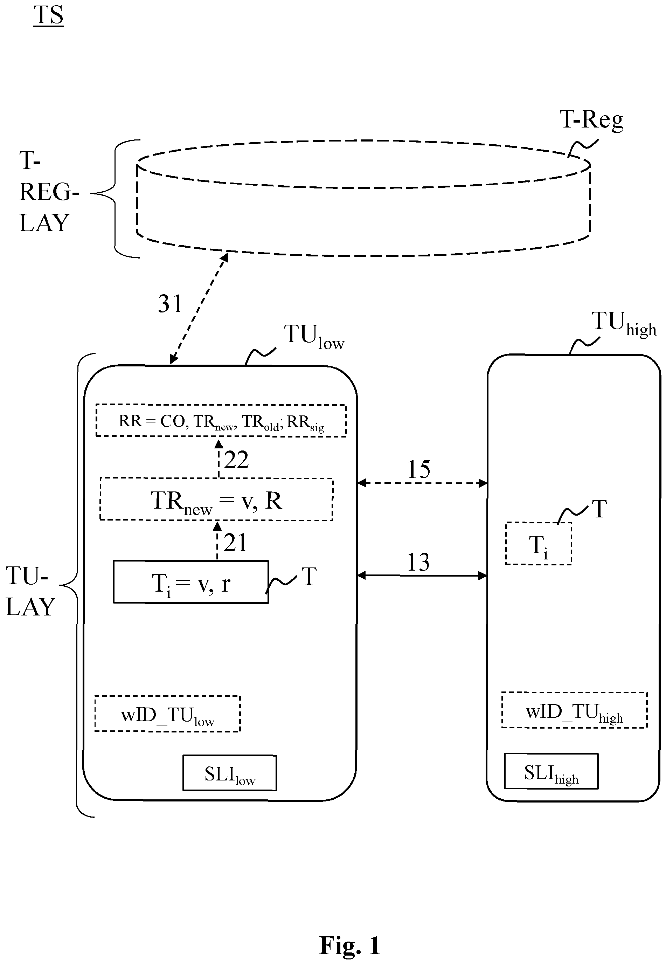

Fig. 1 shows an embodiment example of an electronic payment transaction system TS according to the invention. The transaction system TS comprises a register layer T-REG-LAY in which a token reference register T-Reg is arranged. The TS further comprises a direct transaction layer TU-LAY in which a plurality of transaction units TU may be provided, as an example, a low security level transaction unit TU_{low} and a high security level transaction unit TU_{high} are shown in Fig. 1.

The high security level transaction unit TU_{high} comprises a secure component (not shown in Fig. 1) that is either a TEE, or a secure storage or a secure program code. This secure component allows that the high security level transaction unit TU_{high} is classified with a high security level that is indicted by the security level indicator SLI_{high}. The SLI may be defined according to the security levels as defined in ISO/IEC 18045:2022 or ISO/IEC 15408:2022.

The high security level transaction unit TU_{high} is classified with a high security level that is indicted by the security level indicator SLI_{high}.

The SLI_{low} is lower than the SLI_{high} which means that the level of trust, confidence and/or data integrity assured by the TU_{low} is less than the level of trust, confidence and/or data integrity assured by the TU_{high}.

The SLI is stored as a data element within the TU in a storage unit (not shown in Fig. 1) permanently, e.g. in a once-write storage, e.g. during production of the TU.

According to the invention, the SLIs between the both TUs are exchanged 13 prior the exchange 15 of any token T. So, each TU is aware of the security level of the other TU.

The TU_{high} and TU_{low} of the transaction system TS are configured to exchange 15 tokens T directly with each other. In the case of Fig. 1, the tokens T are payment tokens, which are also referred to as digital coins. Each token T may be issued by a transaction unit TU-I of a an token issuer (not shown in Fig. 1).

Each token T can be modified, such as split, merged or switched, by applying modification-commands by each transaction unit TU. Each token T can be generated by a transaction unit TUI of the token issuer and can also be deleted. These modifications are compliant with the above described third approach and it is refrained from repeating these modifications here again. Each modification can be registered in the T-Reg by transmitting 31 a replacement request (registration request) RR.

A token T is uniquely represented by a monetary value v as well as a random number r. Thus, each token T in this TS has at least two token elements.

The monetary value v as a first mandatory token element can be specified in a range of values from 1 to 2³¹-1. The random number r may be a number in the range of 0 to 2²⁵⁶ - 1, i.e., the order of an elliptic curve, for example secp256r1. For example, the token value v is a 32-bit token element of type integer.

The random number r as a second mandatory token element is a private key of a token-individual key pair. The random number r is unique and secret in the transaction system TS and may not be published or reused. The generation of the random number r must be unpredictable. For example, the random number r is a 32-Byte token element of type integer.

Each transaction unit TU has exclusive access to a storage unit (vault) or includes a token memory in a data store of the transaction units TU.

A token T may be stored as a TLV encoded record in a token store and then has a unique tag and length information, for example, in the following format.

For each token T, a token reference TR can be stored in the token reference register T-Reg. The token reference TR is stored in a token reference register T-Reg to register the uniquely assigned token T. The token reference TR comprises a reference, for instance a public key R that corresponds to the private key r of the token-individual key pair. Using the token-individual key pair allows the unique assignment between token T and token reference TR. The token reference may also comprise the monetary value v (of the token T).

At least a subset (subgroup) of the TR may also comprise the SLI. The token reference TR of the token T can be viewed at any time in the register T-Reg of the transaction system TS.

This token reference TR can be transmitted (sent) 31 to the token reference register T-Reg in form of a registration request RR (being generated in step 22), if necessary, together with a modification command regarding the token T.

If the token reference TR is sent 31 to the token reference register T-Reg, a control means of the TU may insert the SLI. The SLI may be inserted in just one of the TR that are part of a RR or it can be inserted in all TR that are generated by this particular TU.

Additionally, the registration request RR can be signed with the private key r. Signing makes it possible to verify that the sender of the token reference TR was in possession of the token T, further enhancing security in the transaction system TS.

The registration request RR related to switch, split and merge modification may include the modification command CO, a new token reference TR_{new} of a token T to be registered and an old token reference TR_{old} of a token T to be removed from the token reference register T-Reg. The registration request RR may also comprise a signed registration request RR_{sig}, which is the RR signed with the private part r of the new token T.

This registration request RR can be sent 31 to the token reference register T-Reg. This registration request RR is received in the token reference register T-Reg. After the registration request RR has been checked by the token reference register T-Reg, the token reference TR is stored in the token reference register T-Reg, whereby the token T is registered in the transaction system TS and an old token reference TR is deleted from the token reference register T-Reg.

The RR has an input TR (here TR_{old}) that do not have TUGI and has an output TR (here TR_{new}) to which the TU inserts the TUGI as another element. The inserting may be made for protocolling the payment transaction. The TUGI may later be used in the event of a destroyed or malfunctioned or a stolen transaction unit TU.

A token reference TR is uniquely assigned to the token T, here TR_{new} is assigned to token Ti, and is used to register the token Ti in the transaction system TS.

The token reference TR is therefore the public representation of the token T from the direct transaction layer TU-LAY. Sole knowledge or possession of the token reference TR alone does not allow the token T to be transferred and is not equivalent to the TU being in possession of the token T. The token reference TR is used to prevent multiple spending attempts and checks whether token values v have been generated in an improper manner. Therefore, the token reference TR and, if applicable, the history about the tokens T and the corresponding registration requests RR from TU(s) are stored in the token reference register T-Reg.

The tokens T are stored, for example, in the TU, also referred to as wallet.

The TU_{low} may be referred to as simple-wallet, the TU_{high} may be referred to as secure wallet.

These wallets are, for example, software applications within the electronic terminal device in which the TU is operationally embedded. A wallet may be set up as an application on a smartphone, smart card or payment terminal. The wallet is used to securely manage tokens T of the TU, generate token references TR, modify tokens T, and/or exchange tokens T. Wallets are used to communicate with the token reference register T-Reg, generate registration requests RR to the token reference register T-Reg, modify tokens T (switch, merge, split) and/or perform transaction of token T to another TU.

Each wallet may have a wallet identifier wID that is unique with the TS.

There are two basic transaction scenarios, an offline transaction or an online transaction.

A transaction with a TU does not require a communication link to the token reference register T-Reg of the transaction system TS. The transaction system TS is set up to perform a transaction offline, i.e., without a communication link to the token reference register T-Reg. A corresponding registration of token T may therefore be temporally downstream and independent of a transfer of token T to a TU.

In case of offline transaction scenario, there is no connection established to the T-Reg and so, no RR can be sent in step 31. In this offline scenario, the TU_{low} is not allowed to send any token T to another TU. This is because, the lower SLI indicates the lower level of trustworthiness and that the TU_{low} may be attacked or manipulated. So, transmitting means for transmitting the token are in a blocked state and no token T can be sent to the TU_{high} in the exchange step 15. In addition a reception means for receiving tokens in the TU_{high} may be in a blocked state for an offline transaction scenario with a TU_{low}.

In alternative case of an online transaction scenario, there is an connection established to the T-Reg and so, RR can be sent in step 31. In this online scenario, the TU_{low} is allowed to send token T to another TU. This is because, the TU_{low} has the opportunity to register the token T that it wants to transmit in step 15 and the T-Reg as a central unit of the TS is able to verify the token T in view of validity and whether TU_{low} is the rightful owner of that token T. However, in any case, a token T transmitted from TU_{low} to TU_{high} is considered as an incomplete online payment transaction as long as no RR is sent 31 to the T-Reg by the TU_{low}. For both transaction units TU_{low} and TU_{high} the online payment transaction is or can be completed only after successful registration 31.

The token reference register T-Reg is a unit of the transaction system TS and is either a central register or database of the transaction system TS or a decentralized register or database (DLT) of the transaction system TS.

The reference, e.g. the public part R of the token individual key pair is generated by applying a cryptographic function to the private part r of the token individual key pair. This function is difficult to reverse and thus provides the transaction system TS with the required security. It holds that R = r * G, where G can be, for example, a global parameter of the transaction system TS, e.g., a generator point of an elliptic curve, here the secp256r1 curve. Any other suitable cryptographic function to receive the R value can be applied as well.

In an implementation of this disclosure, an electronic token transaction may take place over several steps. A hardware wallet with "high security level", such as TU_{high} of Fig. 1, sends token T in step 15 to a point-of-sales transaction unit with "low security level", such as TU_{low} of Fig. 1. Subsequently, the POS-TU with "low security level", transfers the token T within an online payment scenario to another hardware wallet with a "high security level".

In the process, the reconciliation of the hardware wallet with "high security level", such as TU_{high} of Fig. 1, by the POS-TU can still be included. A possible sequence including an offline transaction (1-3) between TU_{high} and POS-TU and a subsequent online transaction (4-5) between POS-TU and another TU_{high} :
1. hardware wallet with "high security level", such as TU_{high} of Fig. 1, performs a SPLIT modification and transmits a generated token T with the entire command history to POS-TU.
2. at the same time: hardware wallet with "high security level", such as TU_{high} of Fig. 1, transmits the token T to the POS-TU.
3. at the same time: hardware wallet with "high security level", such as TU_{high} of Fig. 1, and the POS-TU complete the token exchange.
   The offline transaction is completed for both transaction units. POS-TU however is blocked to transmit tokens offline and/or any TU_{high or} TU_{low} is blocked to receive tokens from POS-TU offline. Hence, only if/ after communication to T-Reg is available, POS-TU may send a token (or the token received) to another TU such as another TU_{high}.
4. At a later time: POS-TU sends 31 a registration request RR to T-Reg and obtains confirmation from T-Reg.;
5. POS-TU may now forward the confirmation for the registration of a token together with the token to another hardware wallet with "high security level", such as TU_{high} of Fig. 1. The hardware wallet will confirm receipt of the token and the token transaction is already completed at this point for both transaction units. Of course, the RR could also be sent by or via the hardware wallet as well, before confirming success of the transaction.

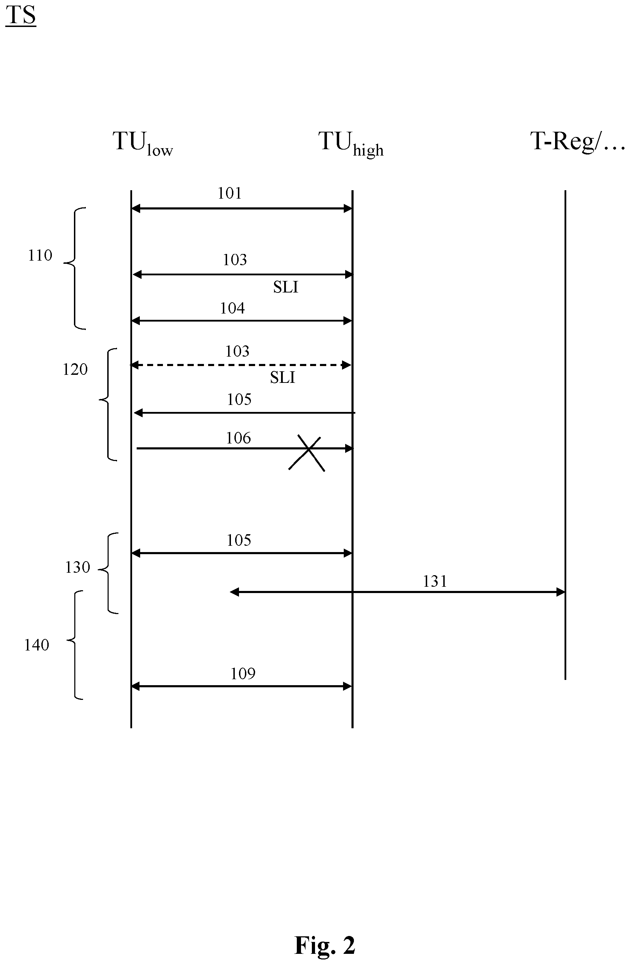

Fig. 2 shows a method for exchanging a token in a transaction within a TS, for example as shown in Fig. 1. The transaction can be performed offline or online. The TS comprises a remote entity, such as T-Reg or a TU issuer unit or a commercial bank unit or ..., to which communication is required in an online transaction scenario. In Fig. 2 a low security level transaction unit TU_{low} and a high security level transaction unit TU_{high} exchange 105 one or more token in a transaction.

In the method, a security level indicator SLI is transmitted 103 at least from one transaction unit to another transaction unit participating in the transaction. The SLI is transmitted 103 to the other transaction unit prior to a token exchange. Preferably, the SLI is at least transmitted from the transaction unit which should transmit 105 a token in the transaction. Typically, both transaction units participating in the transaction mutually transmit 103 their SLI to each other. Depending on the SLI stored in a transaction unit and/or depending on the SLI received from another transaction unit token transmission 105 may be performed/released or blocked 106.

In Fig. 2 a low security level transaction unit TU_{low} and a high security level transaction unit TU_{high} exchange 105 one or more token(s). However, in an offline transaction token transmission from TU_{low} to TU_{High} is blocked 106. In the offline transaction TU_{low} checks the SLI stored and/or TU_{high} checks the SLI received and respectively blocks 106 the transmission from TU_{low} to TU_{High}. Since the security level of TU_{low} is low, in an offline transaction scenario the transmission in this direction is blocked. TU_{low} may however receive 105 one or more tokens from TU_{high}, regardless of the transaction scenario being an offline transaction scenario or an online transaction scenario. Furthermore, TU_{low} in an online transaction may transmit one or more tokens to TU_{high}.

Transaction units of TS having a high security level may transmit tokens (online and/or offline) without checking (and/or receiving) SLI of the transaction partner. In online transactions they may also receive tokens without checking (or receiving) SLIs. In an offline transaction they will however check the received SLI before accepting token reception. Transaction units of TS having a low security level may transmit tokens online without checking (or receiving) SLI of the transaction partner. In online transactions they may also receive tokens without checking SLIs. In an offline transaction however they will check the received SLI before accepting token reception and/or block token transmission due to their own SLI.

A transaction may be divided into three phases, a transaction preparation phase 110, a token exchange phase 120 or 130 and a transaction completion phase 140. Each phase will comprise at least one step, but may comprise multiple steps. Fig. 2 only illustrates the at least one step per phase which is the most relevant one for describing the present solution. In an offline transaction scenario the transaction comprises the preparation phase 110, the offline token exchange phase 120 and the completion phase 140. In an online transaction scenario the transaction comprises the preparation phase 110, the online token exchange phase 130 and the completion phase 140.

The SLI transmission step 103 has to be performed prior to the token exchange step 105 and accordingly is part of the transaction preparation phase 110 or of the offline token exchange phase 120.

The transaction preparation phase 110 may comprise an authentication process 103, 104, which preferably is a mutual authentication process. This may be caused to establish a secure channel for the token exchange. Security is increased, if the token is exchanged, i.e. transmitted or received, via the secure channel, particularly providing integrity and/or confidentiality of the data transmitted. The authentication may be a TS requirement to ensure that the TU is a participant of the TS. Within the authentication process an (or the) authentication certificate(s) is(are) exchanged. The certificate may comprise (refer to) a public authentication key of the TU and/or an identity of the TU or may comprise the public key R of a token reference residing in T. In the example of Fig. 2, TU_{high} (and/ or TU_{low}) exchange their authentication certificate(s).

The SLI is preferably transmitted 103 within a certificate, for example in the authentication certificate(s) of TU_{high} and/or TU_{low} or within another certificate, such as a dedicated SLI certificate or an identity certificate. In particular the SLI can be included as a separate data field of the certificate or - in a preferred variant - in the identity of the TU, wID_TU. So, SLI_{low of} TU_{low} is transmitted 103 to TU_{high} and/or SLI_{high of} TU_{high} is transmitted 103 to TU_{low}, for example only as a part of their public key certificates including wID_TU_{low} and wID_TU_{high}.

As indicated already, the SLI can be exchanged separately and/or via a separate certificate (outside a mutual authentication). The certificates may be linked via the R, the wID or the public authentication key. It could even be exchanged within the token exchange phase 120.

The SLI as stored with the TU may be a data element within a security certificate of the TU. Especially if the security level is specified according to "Common Criteria" of ISO/IEC 15408:2022 or ESO/IEC 18045:2022, for example as "Protection Profile" and/or with an Evaluation Level, short EAL, the issuer of the certificate may have different roles, such as transaction unit issuer; or an external evaluator; or a transaction unit manager/provider that merely loads the transaction unit as a software element into an entity; or producer/manufacture of the transaction unit; or a transaction system operator; or a token issuer, such as a central bank. The transaction unit may contain a (root) certificate for a certifier key. This certifier key may be an issuer public key signed from a root certificate authority of the transaction system.

In a further step 101 of the transaction preparation phase 110 the transaction details including the token value to be exchanged and/or the exchange direction, and/or the transaction scenario (online or offline) may be determined for the transaction. The transaction determination step 101, the SLI exchange step 103 and/or the authentication 104 may take place in any order, particularly: 104, 103, 101 or 101, 103, 104 or 101, 104, 103 or preferably 103, 104, 101.

As already indicated above, in an offline token exchange phase 120 one or more token is exchanged 105, in the example of Fig. 2 from TU_{high} to TU_{low}. In the offline token exchange phase 120 no communication to the remote entity of TS takes place. Since according to the SLI of TU_{high} , the security level of TU_{high} is high, the token exchange can be performed offline. One or both TUs optionally could have a remote connection/connection option during the process, which however would not be used for the transaction. If the token exchange is blocked 106 due to the low security level of the stored or received SLI, the process ends (and as a result no transaction takes place). Hence, if - e.g. according to the transaction preparation phase 110 - a token should be transmitted from TU_{low} to TU_{high} no transaction occurs.

In an online token exchange phase 130 the (one or more) token(s) is exchanged 105. Furthermore a remote communication 131 to the remote entity, e.g. the T-Reg, of TS takes place. The remote communication 131 preferably comprises a registration request for T-Reg, particularly for registering a token, and may comprise a confirmation for the registration (of the token) in T-Reg. If T-Reg is a token reference register, it registers tokens T by token reference TR. The registration request of a new token T created for the transaction in a TU thus comprises new token reference TR derived from T. T-Reg may confirm registration of the token, e.g. the TR, alternatively it could confirm registration of the token for the receiving TU.

One TU of the transaction will communicate with the remote entity, optionally using its own remote connection, a remote connection of the other TU or a remote connection provided by a local terminal. In Fig. 2 these options are indicated by the arrow of step 131 ending between TU_{low} and TU_{high}.

Accordingly, in the online transaction scenario a token may also be transmitted from TU_{low} to TU_{high.} This could for example be a token, previously received offline from another TU_{high.} Neither TU_{low} nor TU_{high} would have to check SLIs in the online transaction.

In a transaction completion phase 140 at least one completion message 109 is exchanged. At least one (or both) TU confirms that the transaction is completed. For both participating TUs the transaction is then (finally) completed. If the token exchange phase 120 or 130 was successful, the TUs may for example simply mutually confirm transaction completion.

However, if (not shown in Fig. 2) the token exchange phase 120,130 is not successful, for example if the remote entity does not confirm the request (for registration), the transaction is not completed. In such cases both TUs will end the process. Preferably they may return to their initial state (before the process). For example a token received could be deleted or a token sent could be considered unsent. Corresponding or alternative steps for cases of failed transactions are known in the art and thus not described herein. Examples for such cases are e.g. discussed in WO 2022/008 321 A1.

The simple wallet TU_{low} can always receive tokens T, e.g., during offline and online transactions. However, in an offline transaction scenario, the TU_{low} cannot send token T in TS. In offline transaction scenario, the TU_{low} cannot authenticate with a public key from a secure wallet TU_{high} or cannot present a certificate including a SLI indicating high security level. Once an online transaction scenario is available, a token T can be sent from the simple wallet and registered for completing a transaction. The secure wallet TU_{high} can send tokens T in offline transaction scenarios as well as in online transaction scenarios.

In a variant not separately shown in Figure 2, TU_{low} in an online transaction scenario is blocked to transmit tokens to other general (low or high security level) TUs of the TS. TU_{low} has one or more associated high security level transaction units, wherein TU_{low} is released to transmit tokens to the associated high security level TUs of the transaction system only. The identity wID_TU(s) of the associated high security level transaction unit(s) would be stored in TU_{low}. TU_{low} is adapted to receive a token (online or offline) but only transmits it to the associated TU(s). In a TS of this variant the other TUs (of low and/or high security level, which are not associated) should be adapted to block reception of tokens from TUs having a low security level. Preferably the issuer of TU_{low}, a TU issuer, provides at least one associated high security level TU for each (or all) TU_{low} issued by TU issuer.

In an independent additional option - not only for this variant - an encryption key for encrypting the tokens for the associated TU(s) or for T-Reg may be stored in TU_{low}. A TU could encrypt a token and transmit it in an (associated-TU- or T-Reg-) encrypted form to TU_{low}. In such cases TU_{low} would transmit the encrypted token to the associated TU or to T-Reg, which decrypts the token.

Different approaches for token exchange are known in the art and can be used herein. WO2023/036458A1, WO2023/011756A1, WO2022/008321A1, EP3956845A1 or WO2021 /170644A1 each disclose token exchange methods, which could be used in one or both of the online or offline token exchange methods.

The T-Reg partly described above manages the storage location for the token references TR, not shown here, as storage units in the token reference register T-Reg. As a representative example, the TR for the token T of the TU_{low} is entered in the storage unit upon replacement request 31 or upon a RR in the remote communication 131. This storage unit may consist of an association of many storage units which are interconnected.

In addition, the token reference register T-Reg may include at least one verification unit (=verifying unit) (not shown). The verification unit of the token reference register T-Reg verifies registration requests RR. Thereby, a syntactical correctness or also the correct specification of a command in the registration request RR can be verified. Also, a history from old (past) commands concerning a token T can be verified. The separation of this verification unit from the storage unit distributes the tasks of filing and checking and increases the speed in the token reference register T-Reg.

Each registration request RR is preferably signed with the private part r. The signature allows a syntactic authenticity of the command to be easily checked by the receiver (T-Reg or the TU). This verification is preferably performed in the storage unit or the verification unit. Furthermore, a register request RR can be syntactically validated, for example, by checking the signature and/or the token reference TR.

Even though a signature may be checked in a TU, this does not ensure that multiple issuances of the same token T have not been attempted. Therefore, registration in the token reference register T-Reg is provided. In addition, a secure hardware platform is maintained by the TU. With available connection to the token reference register T-Reg, the token references TR are transmitted, and the multiple issuance attempt can be detected in the token reference register T-Reg.

If a token reference TR is not yet known in the token reference register T-Reg, it is added.

The commands CO used for RR can be modifications of an existing token T, for example "switch", "split" or "merge" that are used in replacement requests 31. The commands "switch", "merge" and "split" can be integrated into replacement requests (registration requests RR) to register a modification of a token T at the T-Reg.

The RR may also include a signed registration request RR_{sig}. So, each registration request RR also has a signature to show that the TU is in possession of the associated token T. An ECDSA scheme can be applied as signature. The registration request RR is preferably signed with the private part r of the token T. As expressed earlier, the command types CO "Create", "Delete", "Split", "Switch" and "Merge" can also be studied in WO 2020 / 212 331 A1 and it is avoided to repeat the functions or structure thereof.

### REFERENCE SIGNS

- TS: Electronic (payment) transaction system
- TU_{low}: Low security level transaction unit, simple wallet
- TU_{high}: High security level transaction unit, secure wallet
- T-Reg: Token Register

- 1: Storage unit
- 2: Verifying unit

- T-Reg-LAY: Token registration layer
- TU-LAY: Token transfer layer
- SLI: Security Level Indicator
- RR: Registration request, replacement request
- T: Token
- TR: Token reference
- v: Monetary value of T
- r: Secret, private key of token-individual key pair
- R: public key of token-individual key pair
- CO: Command
- RR_{sig}: signed RR
- wIDx: TU identifier of TU x
- 13: exchange/transfer SLI
- 15: transfer of token
- 21: Derive token reference
- 22: Generate RR
- 31: registration request, replacement request

- 110: Preparation phase

- 101: Determination step
- 103: SLI transmission step
- 104: Authentication step

- 120: Offline token exchange phase

- 105: Token exchange
- 106: Blocked token exchange

- 130: Online token exchange phase

- 131: Remote communication step

- 140: Transaction completion phase

## Claims

1. A low security level transaction unit (TU_{low}) for managing transactions in an electronic transaction system (TS), transactions comprising a token exchange, the transaction unit (TU) comprising:
- means for receiving one or more tokens (T) from another transaction unit (TU_{high}, TU_{low}) in a transaction within the electronic transaction system (TS); and
- means for permanently storing a security level indicator (SLI), the security level indicator (SLI) being configured to indicate the low security level of the low security level transaction unit (TU_{low}),
wherein the security level indicator (SLI) being transmitted prior to a token exchange with the other transaction unit (TU_{high}, TU_{low}) in an offline transaction scenario.

2. The low security level transaction unit (TU_{low}) according to claim 1, further comprising means for transmitting one or more tokens (T) to another transaction unit (TU) in a transaction within the electronic transaction system (TS),
wherein the means for transmitting is either in a released state or in a blocked state, wherein the means for transmitting is in a blocked state in the offline transaction scenario.

3. A high security level transaction unit (TU_{high}) for managing transactions in an electronic transaction system (TS), transactions comprising a token exchange, the transaction unit (TU) comprising:
- means for receiving one or more tokens (T) from another transaction unit (TU) in a transaction within the electronic transaction system (TS);
- means for permanently storing a security level indicator (SLI), the security level indicator (SLI) being configured to indicate a high security level of the transaction unit (TU),
wherein the security level indicator (SLI) being transmitted prior to the token exchange with the other transaction unit (TU) in an offline transaction scenario.

4. The high security level transaction unit (TU_{high}) according to claim 3, wherein the high security level transaction unit (TU_{high}) further comprises means for transmitting one or more tokens (T) to another transaction unit (TU_{high}, TU_{low}) in a transaction within the electronic transaction system (TS).

5. The transaction unit (TU_{high}, TU_{low}) according to one of the preceding claims,
wherein
- the means for receiving is either in a released state or in a blocked state, wherein in the offline transaction scenario the means for receiving is in a blocked state with a low security level transaction unit (TU_{low}) and preferably in a released state with a high level transaction unit (TU_{high}); and/or
- in an online transaction scenario the means for transmitting is in a released state.

6. The transaction unit (TU_{high}, TU_{low}) according to one of the preceding claims,
wherein
- in an online transaction scenario the means for receiving is in a blocked state with a low security level transaction unit (TU_{low}); and/or
- in an online transaction scenario the means for transmitting of the low security level transaction unit (TU_{low}) is in a blocked state with transaction units except with at least one dedicated high level transaction unit (TU_{high}).

7. The transaction unit (TU_{low;} TU_{high}) according to one of the preceding claims, further comprising means for transmitting one or more registration requests (RR) to a token reference register (T-Reg) of the electronic transaction system (TS),
wherein each registration request (RR) comprises one or more token references (TR) to be stored in the token reference register (T-Reg), and
wherein each token reference (TR) being uniquely assigned to a token (T) in the electronic payment transaction system (TS),
wherein preferably the registration request (RR) comprises the security level indicator (SLI), particularly in one or more of the token references (TR).

8. The transaction unit (TU_{low}, TU_{high}) according to any one of the preceding claims, wherein the security level indicator (SLI) is one or more of the following:
- a data element within a transaction unit identifier of the transaction unit (TU_{low}, TU_{high});
- a data element within a certificate, preferably an authentication certificate of the transaction unit (TU_{low}, TU_{high});
- a data element within a security certificate.

9. The transaction unit (TU_{low}, TU_{high}) according to one of the preceding claims,
wherein the security level indicator (SLI) is exchanged
- during an transaction initialization phase (110) of the transaction with the other transaction unit (TU_{low}, TU_{high}), the transaction initialization phase (110) preferably comprising an authentication step (104); or
- during a token exchange phase (120; 130) of the transaction with the other transaction unit (TU_{low}, TU_{high}) ) in the offline transaction scenario.

10. The transaction unit (TU_{low}, TU_{high}) according to claim 9, wherein during the transaction initialization phase (110), an authorization certificate is transmitted to the other transaction unit (TU_{low}, TU_{high}), wherein the authorization certificate is used to certify the public key used during the authorization, and wherein the authorization certificate preferably comprises the security level indicator and/or a transaction unit identifier.

11. The transaction unit (TU_{low}, TU_{high}) according to one of the preceding claims, further comprising an identification-certificate, which preferably comprises the security level indicator and/or a transaction unit identifier, and/or a security level indicator certificate.

12. An electronic transaction system (TS) comprising:
- a plurality of transaction units (TU_{low}, TU_{high}) according to one of the claims 1 to 11, each of the plurality of transaction units (TU_{low}, TU_{high}) are enabled for receiving one or more tokens (T) during a transaction; and
- a token register (T-Reg) for registering the tokens (T) of the electronic transaction system (TS).

13. The electronic transaction system (TS) according to claim 12, wherein
- a low security level transaction unit (TU_{low}) of the plurality of transaction units (TU_{low}, TU_{high}), optionally at least one dedicated high level security transaction unit of the plurality of transaction units (TU_{low}, TU_{high}) being associated with the low security level transaction unit (TU_{low}),
wherein in the offline transaction scenario the means for transmitting one or more tokens of the low security level transaction unit (TU_{low}), preferably based on the stored security level indicator (SLI), is in a blocked state, and/or
wherein in the online transaction scenario the means for transmitting, preferably based on a received security level indicator (SLI), is in a released state
+ with only the at least one dedicated high level security transaction unit, or
+ with only high level security transaction units (TU_{high}), or
+ with high and low level security transaction units (TU_{high}, TU_{low,}), and/or
wherein the means for receiving, preferably based on a received security level indicator (SLI), is in a released state with high and low level security transaction units (TU_{high}, TUlow,) or only with high level security transaction units (TU_{high});
and/ or
- a high security level transaction unit (TU_{high}) of the plurality of transaction units (TU_{low}, TU_{high}),
wherein in the offline transaction scenario the means for receiving tokens is blocked to receive one or more tokens (T) from a low level security transaction unit (TU_{low}), preferably based on a received security level indicator (SLI) indicating the low security level of the low security level transaction unit (TU_{low}), and/or
wherein in the online transaction scenario the means for receiving tokens is released or is blocked to receive one or more tokens (T) from a low level security transaction unit (TU_{low}), preferably based on a received security level indicator (SLI) indicating the low security level of the low security level transaction unit (TU_{low}), and/ or
wherein in the online transaction scenario the means for receiving is in a released state with high and low level security transaction units (TU_{high}, TU_{low,}) or only with high level security transaction units (TU_{high}), and/or
wherein in both scenarios the means for transmitting is in a released state with high and low level security transaction units (TU_{high}, TU_{low,});
and/or
- a dedicated high security level transaction unit of the plurality of transaction units (TU_{low}, TU_{high}) being associated with one or more associated low security level transaction units (TU_{low}), wherein in the online transaction scenario the means for receiving tokens is in a released state with the one or more associated low security level transaction units (TU_{low}) and preferably in a blocked state with other low security level transaction units (TU_{low}).

14. A method for exchanging a token (T) in a transaction with a transaction unit (TU_{low}, TU_{high}) of a transaction system (TS), preferably in a transaction unit (TU_{low}, TU_{high}) according to one of the claims 1 to 11 and/or within a payment system (TS) according to one of the claims 12 to 13, wherein the token exchange is performed in either an online transaction scenario or in an offline transaction scenario, the method comprising in the transaction unit (TU_{low}, TU_{high}):
- determining (103) a security level indicator (SLI) indicating a low security level of a low security level transaction unit, by reading a security level indicator stored in the transaction unit and/or by receiving a security level indicator of another transaction unit; and
- in the offline transaction scenario, blocking (106) a transmission of one or more tokens from the low security level transaction unit (TU_{low}); and
- in the online transaction scenario, preferably transmitting (105) one or more tokens from the low security level transaction unit (TU_{low}).

15. The method of claim 14, wherein the method further comprises one or more of the following steps:
- transaction determination (101), particularly including determination of transaction details and/or determination of the transaction scenario; and/or
- exchange (103) of the security level indicator (SLI), preferably as a data element of a certificate, such as an authentication certificate or a security level certificate;
- authentication (104) of the transaction unit, preferably mutual authentication of both transaction units (TU_{low}, TU_{high}) participating in the token exchange; and/or
- confirming (109) transaction completion to the other transaction unit participating in the token exchange.
